# EUROPEAN PATENT APPLICATION

(11) **EP 4 845 010 A1**
(43) Date of publication of application: **25.11.2026**
(21) Application number: 24934680.0
(22) Date of filing: 17.07.2024
(51) Int. Cl.: H02M 3/335, H02M 1/08, H02M 1/00

(54) **PHASE-SHIFTED FULL-BRIDGE CONVERTER AND CONTROL METHOD AND APPARATUS THEREFOR, AND MEDIUM**

(30) Priority: 10.04.2024 CN 202410426850
(71) Applicant: Altenergy Power System Inc., Jiaxing, Zhejiang 314050 (CN)
(72) Inventor: MO, Yunjie, Jiaxing, Zhejiang 314006 (CN); YANG, Yongchun, Jiaxing, Zhejiang 314006 (CN); QI, Biaojie, Jiaxing, Zhejiang 314006 (CN); HUA, Guoyong, Jiaxing, Zhejiang 314006 (CN); LUO, Yuhao, Jiaxing, Zhejiang 314006 (CN)
(74) Representative: Müller Schupfner & Partner Patent- und Rechtsanwaltspartnerschaft mbB (Muc)
(86) International application number: PCT/CN2024/105888
(87) International publication number: WO 2025/213612

(57) **Abstract**

A phase-shifted full-bridge converter and a control method and apparatus therefor, and a medium, which relate to the field of electronic circuits. The control method comprises: when it is detected that the operating state of a phase-shifted full-bridge circuit meets a preset condition, determining a target turn-on time of each switch transistor on the basis of a power demand value and circuit element information; on the basis of the target turn-on times and a preset correspondence, determining a target duty ratio, and an output period of the phase-shifted full-bridge circuit; and on the basis of the output period and the target duty ratio, controlling the turn-on timing of the switch transistors. In the present application, when the operating state of a phase-shifted full-bridge circuit meets a preset condition, a target turn-on time of each switch transistor is determined on the basis of the correspondence between the turn-on time of each switch tube in a continuous current mode and the turn-on time of each switch tube in a discontinuous current mode, and a target duty ratio is determined on the basis of the correspondence between the duty ratio, the turn-on time and the output power of the circuit in the discontinuous current mode, thereby making the current of the circuit discontinuous, and thus reducing the switching loss of the circuit. Soft switching is realized by means of controlling the circuit to be in a resonant state within a turn-off time.

## Description

This application claims the priority to Chinese Patent Application No. 202410426850.1, titled "PHASE-SHIFTED FULL-BRIDGE CONVERTER AND CONTROL METHOD AND APPARATUS THEREFOR, AND MEDIUM", filed on April 10, 2024 with the China National Intellectual Property Administration, which is incorporated herein by reference in its entirety.

### FIELD

The present disclosure relates to the field of electronic circuits, and in particular to a phase-shifted full-bridge converter, a control method and apparatus for the phase-shifted full-bridge converter, and a medium.

### BACKGROUND

A phase-shifted full-bridge converter is a common power electronic topology, in which phase-shift angles of driving voltages of power transistors on bridge arms are adjusted through phase-shift control technology to regulate an output voltage. This type of converter features high efficiency, low loss, and good reliability, and is therefore widely used in applications such as power inverters, power supplies, and electric vehicle charging.

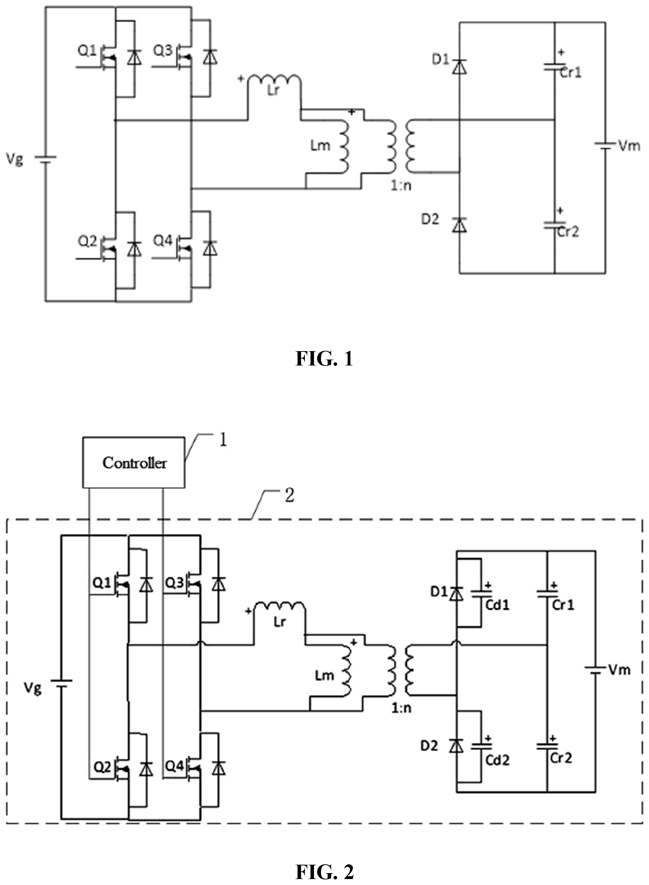

FIG. 1 is a structural diagram of an existing phase-shifted full-bridge circuit according to an embodiment of the present disclosure. As shown in FIG. 1, during operation of the phase-shifted full-bridge converter, switching transistors Q1 to Q4 are alternately turned on. When the phase-shifted full-bridge converter is in a low-power output state, in order to reduce power consumption, it is required to shorten turn-on durations of the switching transistors (that is, to reduce a duty cycle), which results in excessively high switching frequencies of the switching transistors and excessive switching losses in the circuit, thereby affecting circuit stability.

Therefore, how to provide a novel phase-shifted full-bridge converter to prevent excessive switching losses during low-power output and improve the stability and output power of the phase-shifted full-bridge converter is an urgent issue to be addressed by those skilled in the art.

### SUMMARY

The present disclosure aims to address the issue in the prior art that when a phase-shifted full-bridge converter outputs a low power, switching frequencies of switching transistors are relatively high, resulting in excessive switching losses. To this end, a phase-shifted full-bridge converter, a control method and apparatus for the phase-shifted full-bridge converter, and a medium are provided in the present disclosure, so as to reduce the switching losses while ensuring the circuit output power.

In order to address the above technical issue, a phase-shifted full-bridge converter is provided in the present disclosure, which comprises a controller, a phase-shifted full-bridge circuit, a first capacitor, and a second capacitor, where
the phase-shifted full-bridge circuit comprises a first bridge arm circuit, a second bridge arm circuit, a magnetizing inductance, a transformer, a first diode, a second diode, a third capacitor, and a fourth capacitor, where
   a first terminal of the magnetizing inductance is connected to a midpoint of the first bridge arm circuit, a second terminal of the magnetizing inductance is connected to a first terminal of a primary side of the transformer, a second terminal of the primary side of the transformer is connected to a midpoint of the second bridge arm circuit, a first terminal of a secondary side of the transformer is connected to a second terminal of the third capacitor and a first terminal of the fourth capacitor, a second terminal of the secondary side of the transformer is connected to an anode of the first diode and a cathode of the second diode, a cathode of the first diode is connected to a first terminal of the third capacitor, a node connecting the cathode of the first diode and the first terminal of the third capacitor serves as a first output terminal, an anode of the second diode is connected to a second terminal of the fourth capacitor, and a node connecting the anode of the second diode and the second terminal of the fourth capacitor serves as a second output terminal;
the first capacitor is connected in parallel with the first diode on a secondary side of the phase-shifted full-bridge circuit, and the second capacitor is connected in parallel with the second diode on the secondary side of the phase-shifted full-bridge circuit; and
the controller is connected to control terminals of respective switching transistors of the phase-shifted full-bridge circuit.

In order to address the above technical issue, a control method for the phase-shifted full-bridge converter is further provided in the present disclosure, applied to the aforementioned phase-shifted full-bridge converter.

The control method comprises:
determining, in response to detecting that an operating state of the phase-shifted full-bridge circuit satisfies a preset condition, target turn-on durations of the respective switching transistors of the phase-shifted full-bridge circuit based on a power demand value and circuit element information;
determining a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and
controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

In some embodiments, determining whether the operating state of the phase-shifted full-bridge circuit satisfies the preset condition comprises:
acquiring real-time switching frequencies of the switching transistors of the phase-shifted full-bridge circuit and the power demand value of the phase-shifted full-bridge circuit; and
determining, in response to the real-time switching frequencies being greater than a limit switching frequency and/or the power demand value being lower than a preset power, that the operating state of the phase-shifted full-bridge circuit does not satisfy the preset condition, where the limit switching frequency is determined based on a correspondence between switching frequencies and switching losses of the switching transistors of the phase-shifted full-bridge circuit.

In some embodiments, determining the target turn-on durations of the respective switching transistors of the phase-shifted full-bridge circuit based on the power demand value and the circuit element information comprises:
determining performance information of the switching transistors based on the circuit element information; and
determining, based on the performance information, the power demand value, and a correspondence between the switching losses of the switching transistors and the circuit output power, a preset frequency that enables the circuit output power of the phase-shifted full-bridge circuit to satisfy the power demand value and minimizes the switching losses of the switching transistors, and determining the target turn-on durations.

In some embodiments, determining the target duty cycle and the output cycle of the phase-shifted full-bridge circuit based on the target turn-on durations and the preset correspondence comprises:
acquiring the correspondence among the turn-on durations of the switching transistors, the duty cycle, and the circuit output power in the discontinuous current mode; and
determining the target duty cycle and the output cycle of the phase-shifted full-bridge circuit based on the target turn-on durations and the correspondence.

In some embodiments, during the turn-off duration, controlling the first capacitor, the second capacitor, the third capacitor, the fourth capacitor, and the transformer to be in the resonant state comprises:
in a first resonant cycle, turning on a second switching transistor and a fourth switching transistor of the phase-shifted full-bridge circuit, and turning off a first switching transistor and a third switching transistor, to control the first capacitor, the second capacitor, the transformer, the third capacitor, and the fourth capacitor to enter the resonant state; and
in a second resonant cycle, turning off the second switching transistor and the fourth switching transistor of the phase-shifted full-bridge circuit, and turning on the first switching transistor and the third switching transistor, to control the first capacitor, the second capacitor, the transformer, the third capacitor, and the fourth capacitor to enter the resonant state, and
after controlling the first capacitor, the second capacitor, the third capacitor, the fourth capacitor, and the transformer to enter the resonant state, the control method further comprises:
   determining a number of cycles of the resonant state based on the turn-off duration to determine a duration of the resonant state.

In some embodiments, the control method further comprises:
controlling, in response to the power demand value satisfying the preset condition, the phase-shifted full-bridge circuit to be in a continuous current mode.

In order to address the above technical issue, a control apparatus for the phase-shifted full-bridge converter is further provided in the present disclosure, applied to the aforementioned phase-shifted full-bridge converter.

The control apparatus comprises:
a first determination module, configured to determine, in response to detecting that an operating state of the phase-shifted full-bridge circuit satisfies a preset condition, target turn-on durations of the respective switching transistors of the phase-shifted full-bridge circuit based on a power demand value and circuit element information;
a second determination module, configured to determine a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and
a control module, configured to control a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

In order to address the above technical issue, a control apparatus for a phase-shifted full-bridge converter is further provided in the present disclosure, comprising:
a memory, configured to store a computer program; and
a processor, configured to execute the computer program to implement the control method for the phase-shifted full-bridge converter.

In order to address the above technical issue, a computer-readable storage medium is further provided in the present disclosure, on which a computer program is stored, where the computer program, when executed by a processor, implements the control method for the phase-shifted full-bridge converter.

A control method for a phase-shifted full-bridge converter is provided according to the present disclosure, comprising: determining, in response to detecting that an operating state of the phase-shifted full-bridge circuit satisfies a preset condition, target turn-on durations of the respective switching transistors of the phase-shifted full-bridge circuit based on a power demand value and circuit element information, so as to increase turn-on durations of the switching transistors while keeping the output power of the phase-shifted full-bridge circuit unchanged, thereby reducing the switching frequencies of the switching transistors; determining a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit. It can be seen that in the technical solution provided by the present disclosure, when the operating state of the phase-shifted full-bridge circuit satisfies the preset condition, the target turn-on durations of the switching transistors are determined based on a correspondence of the turn-on durations of the switching transistors between the continuous current mode and the discontinuous current mode, and the target duty cycle is determined based on the correspondence among the duty cycle, the turn-on durations, and the circuit output power in the discontinuous current mode, so that the phase-shifted full-bridge circuit enters the discontinuous current mode, thereby reducing the switching losses of the switching transistors. Further, by controlling the first capacitor, the second capacitor, the third capacitor, the fourth capacitor, and the transformer of the phase-shifted full-bridge circuit to be in the resonant state during the turn-off duration of the phase-shifted full-bridge circuit, soft switching of the circuit is achieved, thereby further reducing the switching losses.

In addition, a control method and apparatus for a phase-shifted full-bridge converter, and a medium are further provided in the present disclosure, with the same effects as above.

### BRIEF DESCRIPTION OF THE DRAWINGS

In order to more clearly illustrate the embodiments of the present disclosure, the drawings required for use in the embodiments will be briefly introduced below. Obviously, the drawings described below are only some embodiments of the present disclosure. For those ordinarily skilled in the art, other drawings may be obtained based on these drawings without creative efforts.
FIG. 1 is a structural diagram of an existing phase-shifted full-bridge circuit according to an embodiment of the present disclosure;
FIG. 2 is a structural diagram of a phase-shifted full-bridge converter according to an embodiment of the present disclosure;
FIG. 3 is a flowchart of a control method for a phase-shifted full-bridge converter according to an embodiment of the present disclosure;
FIG. 4 is a schematic diagram of mode 1 of a phase-shifted full-bridge converter according to an embodiment of the present disclosure;
FIG. 5 is a schematic diagram of mode 2 of a phase-shifted full-bridge converter according to an embodiment of the present disclosure;
FIG. 6 is a schematic diagram of mode 3 of a phase-shifted full-bridge converter according to an embodiment of the present disclosure;
FIG. 7 is a main waveform diagram of modes in a continuous current mode according to the present disclosure;
FIG. 8 is a schematic diagram of mode 4-1 of a phase-shifted full-bridge converter according to an embodiment of the present disclosure;
FIG. 9 is a schematic diagram of mode 4-2 of a phase-shifted full-bridge converter according to an embodiment of the present disclosure;
FIG. 10 is a main waveform diagram of modes in a discontinuous current mode according to the present disclosure;
FIG. 11 is another waveform diagram of modes in the discontinuous current mode according to the present disclosure;
FIG. 12 is a structural diagram of a control apparatus for a phase-shifted full-bridge converter according to an embodiment of the present disclosure; and
FIG. 13 is a structural diagram of a control apparatus for a phase-shifted full-bridge converter according to another embodiment of the present disclosure.

Reference numerals are listed as follows:

| | |
|---|---|
| 1: Controller, | 2: Phase-shifted full-bridge circuit. |

### DETAILED DESCRIPTION

The technical solutions in the embodiments of the present disclosure are described clearly and completely below in conjunction with the drawings in the embodiments of the present disclosure. Obviously, the described embodiments are only a part of the embodiments of the present disclosure, rather than all the embodiments. Based on the embodiments in the present disclosure, all other embodiments obtained by those of ordinary skill in the art without creative efforts shall fall within the protection scope of the present disclosure.

The core of the present disclosure is to provide a phase-shifted full-bridge converter and a control method, apparatus, and a medium thereof, so as to reduce switching losses of the circuit and achieve soft switching of the circuit.

FIG. 1 is a structural diagram of an existing phase-shifted full-bridge circuit provided by an embodiment of the present disclosure. As shown in FIG. 1, in a phase-shifted full-bridge circuit 2, when the circuit is in a low-power output state, in order to reduce power consumption, it is required to shorten turn-on durations of switching transistors (i.e., to reduce a duty cycle), which results in excessively high switching frequencies of the switching transistors and excessive switching losses in the circuit, thereby affecting circuit stability. In order to address this technical issue, a phase-shifted full-bridge converter and a control method thereof are provided in the present disclosure. When an operating state of a phase-shifted full-bridge circuit satisfies a preset condition, target turn-on durations of switching transistors are determined based on a correspondence of turn-on durations of the switching transistors between a continuous current mode and a discontinuous current mode, and a target duty cycle is determined based on a correspondence among a duty cycle, turn-on durations, and a circuit output power in the discontinuous current mode, so that the phase-shifted full-bridge circuit enters the discontinuous current mode, thereby reducing the switching losses of the switching transistors. Further, by controlling a first capacitor, a second capacitor, a third capacitor, a fourth capacitor, and a transformer of the phase-shifted full-bridge circuit to be in a resonant state during a turn-off duration of the phase-shifted full-bridge circuit, soft switching of the circuit is achieved, thereby further reducing the switching losses.

In order to enable those skilled in the art to better understand the solution of the present disclosure, the present disclosure is further described in detail below in conjunction with the drawings and specific embodiments.

FIG. 2 is a structural diagram of a phase-shifted full-bridge converter provided by an embodiment of the present disclosure. As shown in FIG. 2, the phase-shifted full-bridge converter comprises a controller 1, a phase-shifted full-bridge circuit 2, a first capacitor Cd1, and a second capacitor Cd2. The phase-shifted full-bridge circuit 2 comprises a first bridge arm circuit, a second bridge arm circuit, a magnetizing inductance, a transformer, a first diode D1, a second diode D2, a third capacitor Cr1, and a fourth capacitor Cr2. A first terminal of the magnetizing inductance is connected to a midpoint of the first bridge arm circuit. A second terminal of the magnetizing inductance is connected to a first terminal of a primary side of the transformer. A second terminal of the primary side of the transformer is connected to a midpoint of the second bridge arm circuit. A first terminal of a secondary side of the transformer is connected to a second terminal of the third capacitor Cr1 and a first terminal of the fourth capacitor Cr2. A second terminal of the secondary side of the transformer is connected to an anode of the first diode D1 and a cathode of the second diode D2. A cathode of the first diode D1 is connected to a first terminal of the third capacitor Cr1, and a node connecting the cathode of the first diode D1 and the first terminal of the third capacitor Cr1 serves as a first output terminal. An anode of the second diode D2 is connected to a second terminal of the fourth capacitor Cr2, and a node connecting the anode of the second diode D2 and the second terminal of the fourth capacitor Cr2 serves as a second output terminal. The first capacitor Cd1 is connected in parallel with the first diode D1 on a secondary side of the phase-shifted full-bridge circuit 2, and the second capacitor Cd2 is connected in parallel with the second diode D2 on the secondary side of the phase-shifted full-bridge circuit 2. The controller 1 is connected to control terminals of respective switching transistors of the phase-shifted full-bridge circuit 2.

In an implementation, when the phase-shifted full-bridge circuit 2 is in a low-power output state, the controller 1 controls a conduction timing of the switching transistors so that the circuit enters a discontinuous current mode, thereby reducing the switching frequencies of the switching transistors and reducing the switching losses. When the phase-shifted full-bridge circuit 2 is in a high-power output state, the controller 1 controls the conduction timing of the switching transistors so that the circuit enters a continuous current mode, thereby ensuring stable output of the phase-shifted full-bridge circuit 2. Here, the high-power output state and the low-power output state are determined based on circuit element information, which are not limited herein.

In an implementation, in order to reduce the switching frequencies of the switching transistors, it is required to increase the turn-on durations of the switching transistors, that is, to increase a high-level output time in each output cycle of the phase-shifted full-bridge circuit 2. After the high-level output time is increased, in order to ensure that the output power (the duty cycle) remains unchanged, a low-level output time is increased, and the overall cycle is also increased accordingly.

In the embodiment, the phase-shifted full-bridge converter is provided, comprising the controller, the phase-shifted full-bridge circuit, the first capacitor, and the second capacitor. The first capacitor is connected in parallel with the first diode on the secondary side of the phase-shifted full-bridge circuit, and the second capacitor is connected in parallel with the second diode on the secondary side of the phase-shifted full-bridge circuit. The controller is configured to, in response to detecting that a power demand value does not satisfy a preset condition, determine an output duty cycle based on the power demand value, determine an turn-off duration of the phase-shifted full-bridge circuit based on circuit element information, and determine an output cycle of the phase-shifted full-bridge circuit based on the duty cycle and the turn-off duration, so as to ensure that an output power of the phase-shifted full-bridge circuit meets the power demand value. The controller is further configured to control a conduction timing of the switching transistors of the phase-shifted full-bridge circuit based on the output cycle, so that the phase-shifted full-bridge circuit enters the discontinuous current mode. The turn-off duration is a value satisfying a case that the switching frequencies of the switching transistors are not greater than a preset frequency, and the preset frequency is determined based on a correspondence between the switching losses of the switching transistors and the circuit output power. The controller 1 is further configured to control, during the turn-off duration, the first capacitor, the second capacitor, the third capacitor, the fourth capacitor, and the transformer to be in a resonant state, so as to achieve soft switching of the circuit after the turn-off duration of the phase-shifted full-bridge converter ends, thereby further reducing the switching losses. It can be seen that in the technical solution provided by the present disclosure, when the operating state of the phase-shifted full-bridge circuit satisfies the preset condition, the target turn-on durations of the switching transistors are determined based on the correspondence of the turn-on durations of the switching transistors between the continuous current mode and the discontinuous current mode, and the target duty cycle is determined based on the correspondence among the duty cycle, the turn-on durations, and the circuit output power in the discontinuous current mode, so that the phase-shifted full-bridge circuit enters the discontinuous current mode, thereby reducing the switching losses of the switching transistors. Further, by controlling the first capacitor, the second capacitor, the third capacitor, the fourth capacitor, and the transformer of the phase-shifted full-bridge circuit to be in the resonant state during the turn-off duration of the phase-shifted full-bridge circuit, soft switching of the circuit is achieved, thereby further reducing the switching losses.

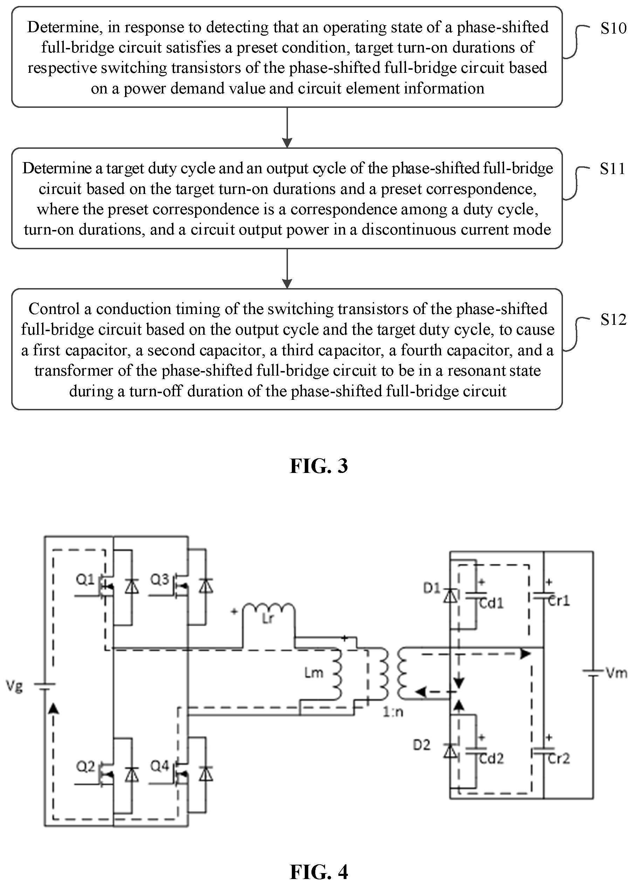

FIG. 3 is a flowchart of a control method for a phase-shifted full-bridge converter according to an embodiment of the present disclosure. The control method is applied to the phase-shifted full-bridge converter comprising the controller 1, the phase-shifted full-bridge circuit 2, the first capacitor Cd1, and the second capacitor Cd2. As shown in FIG. 3, the control method includes:
S10: determining, in response to detecting that an operating state of the phase-shifted full-bridge circuit satisfies a preset condition, target turn-on durations of the respective switching transistors of the phase-shifted full-bridge circuit based on a power demand value and circuit element information;
S11: determining a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and
S12: controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

As shown in FIG. 2, the phase-shifted full-bridge converter provided in the present disclosure comprises: a controller 1, a primary-side bridge arm circuit, a transformer, a first diode D1, a second diode D2, a first capacitor Cd1, a second capacitor Cd2, a third capacitor Cr1, and a fourth capacitor Cr2. A first terminal of a secondary winding of the transformer is connected to a second terminal of the first capacitor Cd1 and a first terminal of the second capacitor Cd2. A second terminal of the secondary winding of the transformer is connected to an anode of the first diode D1 and a cathode of the second diode D2. A cathode of the first diode D1 and a first terminal of the first capacitor Cd1 are connected together as a first output terminal of the phase-shifted full-bridge converter, and an anode of the second diode D2 and a second terminal of the second capacitor Cd2 are connected together as a second output terminal of the phase-shifted full-bridge converter. The third capacitor Cr1 is connected in parallel with the first diode D1, and the fourth capacitor Cr2 is connected in parallel with the second diode D2. The controller 1 is configured to acquire a power output instruction so as to determine the operating state of the phase-shifted full-bridge converter and a control strategy corresponding to the operating state based on the power output instruction.

In an embodiment, the primary-side bridge arm circuit comprises a first bridge arm and a second bridge arm. First terminals of the first bridge arm and the second bridge arm are connected, and second terminals of the first bridge arm and the second bridge arm are connected. A midpoint of the first bridge arm is connected to a first terminal of a primary-side circuit of the transformer, and a midpoint of the second bridge arm is connected to a second terminal of the primary-side circuit of the transformer. Correspondingly, the determining, by the controller 1, whether the phase-shifted full-bridge circuit satisfies the preset condition may be determining whether the power output instruction is greater than a power threshold. If the power output instruction is greater than the power threshold, it is determined that the phase-shifted full-bridge converter is in a high-power output state and does not satisfy the preset condition; and if the power output instruction is not greater than the power threshold, it is determined that the phase-shifted full-bridge converter is in a low-power output state and satisfies the preset condition. In addition, the determining, by the controller 1, whether the phase-shifted full-bridge circuit satisfies the preset condition may further be determining whether the switching frequencies of the switching transistors are greater than a preset frequency, and if the switching frequencies are greater than the preset frequency, it is determined that the preset condition is satisfied.

Specifically, when the power output instruction is greater than the power threshold, the phase-shifted full-bridge circuit 2 is in the continuous current mode. In this mode, there are six modes in one cycle under the continuous current mode, which are described in detail below.

As shown in FIG. 4, mode 1 (t0-t1) is described as follows.

At a time instant t0, the converter completes commutation, and a first switching transistor Q1 and a fourth switching transistor Q4 are forwardly turned on. A current of the primary-side circuit of the transformer flows forwardly through the first switching transistor Q1, a leakage inductance, the transformer, and the fourth switching transistor Q4, and continuously increases from zero. On the secondary side of the transformer, D1 enters a turn-off state, a voltage of Cd1 increases from zero and Cd1 is charged, and a voltage of Cd2 decreases from Vm and Cd2 discharges. A voltage of the resonant capacitor Cr1 decreases from a maximum value and Cr1 discharges, and a voltage of the resonant capacitor Cr2 increases from a minimum value and Cr2 is charged. At a time instant t1, Cd1 is charged to Vm, Cd2 discharges to zero, and D2 is turned on. In mode 1, the topology does not output current to Vm, and Lr, Lm, Cd1, Cd2, Cr1, and Cr2 participate in resonance simultaneously.

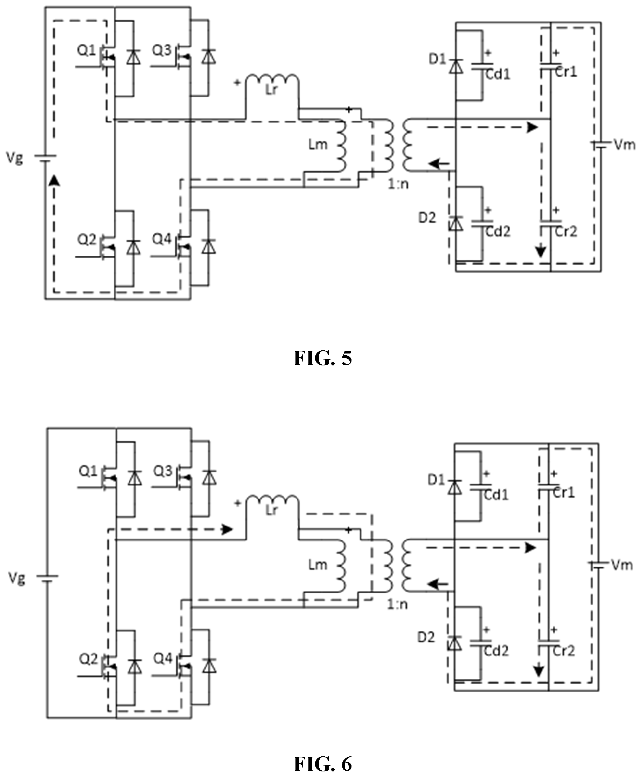

As shown in FIG. 5, mode 2 (t1-t2) is described as follows.

From mode 1 to mode 2, a control signal of the controller 1 does not change. Due to the voltage clamping effect of the rectifier diodes, the capacitors Cd1 and Cd2 no longer participate in resonance. During the time period from t1 to t2, the first switching transistor Q1 and the fourth switching transistor Q4 are forwardly turned on. The current of the primary-side circuit of the transformer remains forward, passing through the first switching transistor Q1, the leakage inductance, the transformer, and the fourth switching transistor Q4. The rectifier diode D1 remains in the turn-off state, the voltage of Cd1 is Vm, the voltage of Cd2 is zero, and D2 is turned on. The voltage of the resonant capacitor Cr1 continuously decreases and Cr1 discharges, and the voltage of the resonant capacitor Cr2 continuously increases and Cr2 is charged. In mode 2, the topology outputs current to Vm, and Lr, Lm, Cr1, and Cr2 participate in resonance simultaneously.

As shown in FIG. 6, mode 3 (t2-t3) is described as follows.

At a time instant t2, the first switching transistor Q1 is turned off, and the fourth switching transistor Q4 remains turned on. In mode 3, the input direct-current source Vg does not input current to the topology. During this time period, Lr freewheels to provide current for the topology. The current of the primary-side circuit of the transformer remains forward, passing through Lr, the transformer, a body diode of the fourth switching transistor Q4, and a body diode of a second switching transistor Q2, and the current continuously decreases. The rectifier diode D1 remains in the turn-off state, the voltage of Cd1 is Vm, the voltage of Cd2 is zero, and D2 is turned on. The voltage of the resonant capacitor Cr1 continuously decreases and Cr1 discharges, and the voltage of the resonant capacitor Cr2 continuously increases and Cr2 is charged. At a time instant t3, the primary-side current of the transformer and the current of D2 freewheel to zero, and D2 is turned off. At this time, Cr1 discharges to a minimum voltage, and Cr2 is charged to a maximum voltage.

In mode 3 (t2-t3), the topology outputs current to Vm, and Lr, Lm, Cr1, and Cr2 participate in resonance simultaneously. Modes 4, 5, and 6 are completely symmetrical to modes 1, 2, and 3, and thus are not repeated here.

When the power output instruction is not greater than the power threshold, the phase-shifted full-bridge converter is in the discontinuous current mode. In this mode, there are eight modes in one cycle, which are described in detail below.

Modes 1, 2, and 3 in the discontinuous current mode are completely identical to those in the continuous current mode. Mode 4 is an additional mode in the discontinuous current mode compared with the continuous current mode. Mode 4 is further divided into two stages: mode 4-1 and mode 4-2. During mode 4, the current of the transformer reverses multiple times and provides conditions for entering mode 5 to realize soft switching.

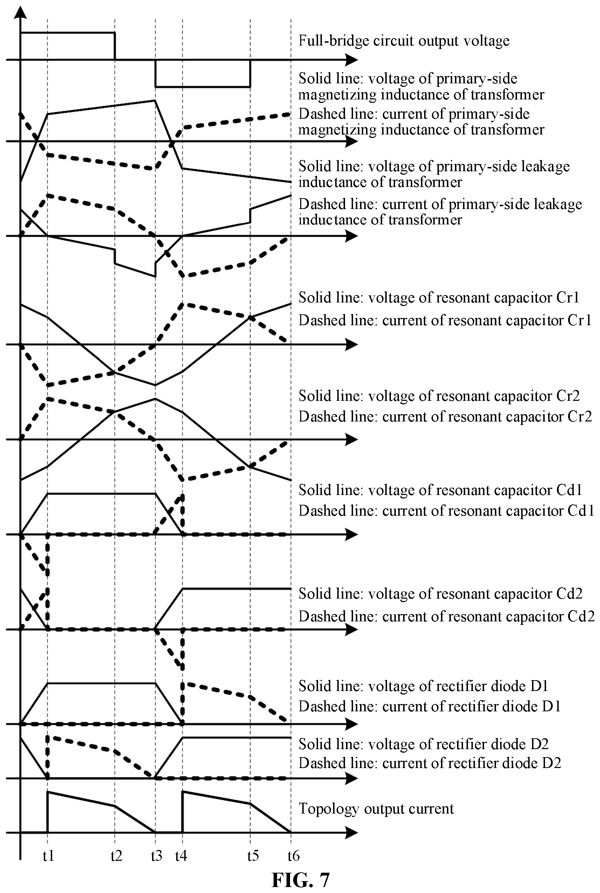

FIG. 7 is a main waveform diagram of the modes in the continuous current mode according to the present disclosure, including, from top to bottom, an output voltage of the full-bridge circuit, a voltage and a current of a primary-side magnetizing inductance Lm of the transformer, a voltage and a current of a primary-side leakage inductance the transformer, a voltage and a current of the resonant capacitor Cr1, a voltage and a current of the resonant capacitor Cr2, a voltage and a current of the resonant capacitor Cd1, a voltage and a current of the resonant capacitor Cd2, a voltage and a current of the rectifier diode D1, a voltage and a current of the rectifier diode D2, and an output current of the full-bridge circuit. FIG. 7 shows the voltage waveform output by the full-bridge circuit under control, and the corresponding current is the same as the current of the primary-side leakage inductance of the transformer. A sum of the voltages of Cr1 and Cr2 is always Vm, and the currents of Cr1 and Cr2 are always equal in magnitude and opposite in direction. Cd1 is connected in parallel with D1, and Cd2 is connected in parallel with D2. Thus, voltage curves of Cd1 and Cd2 are completely identical. Cd1 and Cd2 only have non-zero currents and participate in resonance in mode 1 (t0-t1) and mode 4 (t3-t4). In the other modes, Cd1 and Cd2 are clamped by the diode voltages and do not participate in resonance. The output voltage is constantly Vm, and the output current varies with the modes.

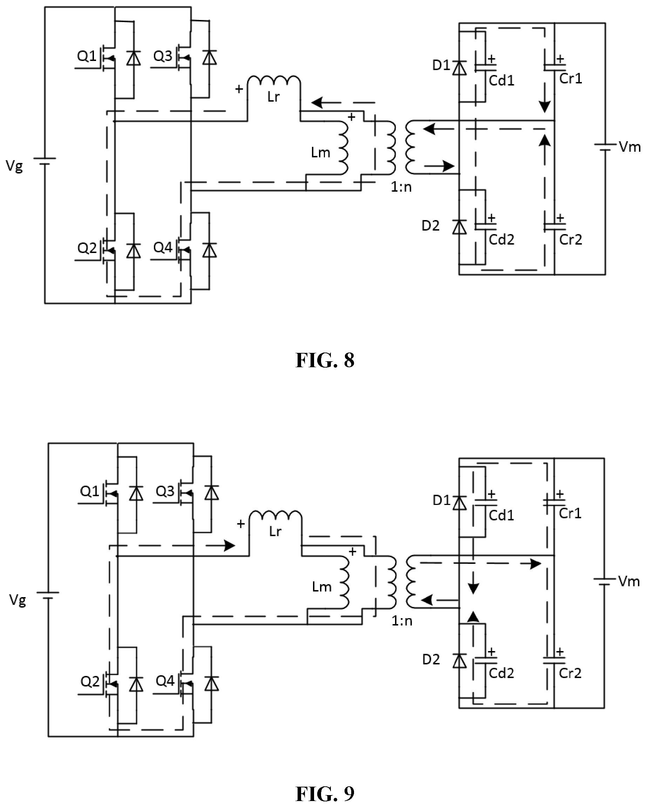

Mode 4-1 (t3-t4) is shown in FIG. 8. At the time instant t3, the freewheeling current on the primary side of the transformer decreases to zero and reverses. Before and after this time instant t3, the second switching transistor Q2 and the fourth switching transistor Q4 remain turned on, and the first switching transistor Q1 and the third switching transistor Q3 are turned off. In mode 4-1, the input direct-current source Vg still does not input current to the topology, and Lr freewheels to provide current for the topology. The current of the primary-side circuit of the transformer remains reverse, passing through Lr, the transformer, the body diode of the second switching transistor Q2, and the body diode of the fourth switching transistor Q4. The rectifier diode D1 remains in the turn-off state, D2 is turned off, Cd1 starts to discharge, and Cd2 starts to be charged. The resonant capacitor Cr1 is charged through Cd1, and the voltage of Cr1 increases. The resonant capacitor Cr2 discharges to Cd2, and the voltage of Cr2 decreases. In mode 4-1, Vm only plays a voltage clamping role, the topology does not transmit power to Vm, and Lr, Lm, Cd1, Cd2, Cr1, and Cr2 participate in resonance simultaneously. At a time instant t4, the primary-side current of the transformer freewheels to zero again and reverses.

Mode 4-2 (t4-t5) is shown in FIG. 9. At the time instant t4, the freewheeling current on the primary side of the transformer freewheels to zero again, and the direction changes from reverse to forward. Before and after the time instant t4, the second switching transistor Q2 and the fourth switching transistor Q4 still remain turned on, and the first switching transistor Q1 and the third switching transistor Q3 are turned off. In mode 4-2, the input direct-current source Vg still does not input current to the topology, and Lr freewheels to provide current for the topology. The current of the primary-side circuit of the transformer remains forward, passing through Lr, the transformer, the body diode of the fourth switching transistor Q4, and the body diode of the second switching transistor Q2. The rectifier diodes D1 and D2 remain in the turn-off state, Cd1 starts to be charged, and Cd2 starts to discharge. The resonant capacitor Cr1 discharges to Cd1, and the voltage of Cr1 decreases. The resonant capacitor Cr2 is charged through Cd2, and the voltage of Cr2 increases. In mode 4-2, Vm still only plays a voltage clamping role, the topology does not transmit power to Vm, and Lr, Lm, Cd1, Cd2, Cr1, and Cr2 participate in resonance simultaneously. At a time instant t5, the primary-side current of the transformer freewheels to zero again and reverses.

Mode 4 (including mode 4-1 and mode 4-2) is a free resonance state. In mode 4-2, soft switching conditions may be provided for the third switching transistor Q3 and the fourth switching transistor Q4 of the lagging bridge arm. In mode 4 of the discontinuous current mode, as long as the power in the resonant cavity maintains the resonant state, the duration of mode 4 (the number of free resonance cycles) may be arbitrarily adjusted based on control requirements.

Mode 8 is symmetrical to mode 4. The principle for the soft switching when the third switching transistor Q3 is turned off and the fourth switching transistor Q4 is turned on is the same, and thus is not repeated here.

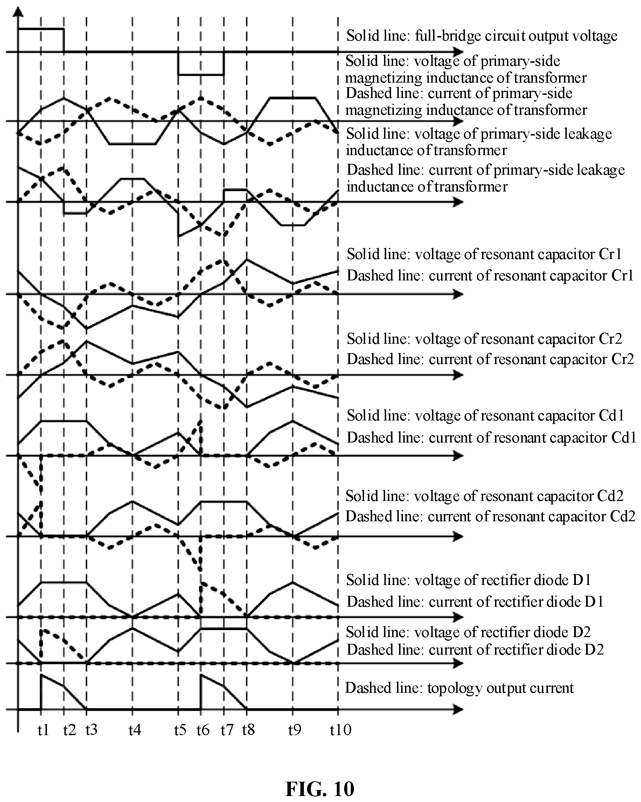

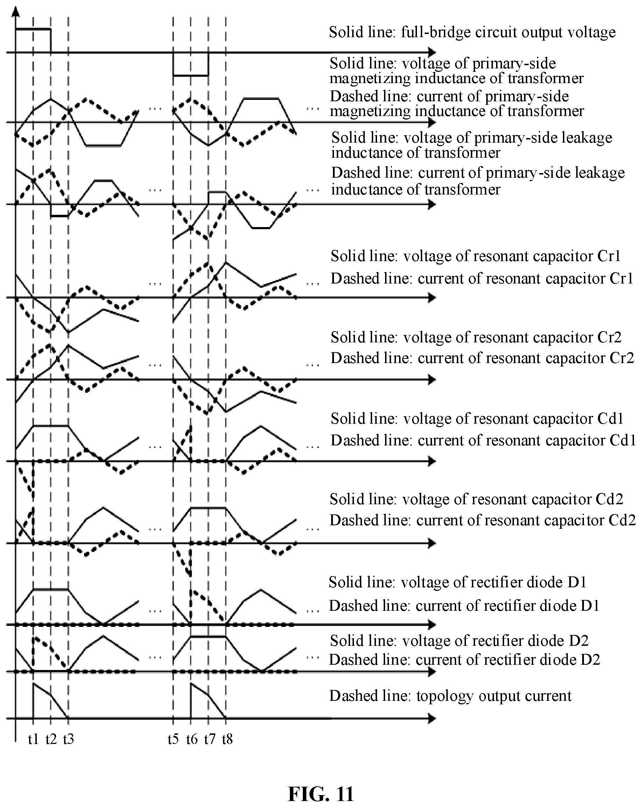

FIG. 10 is a main waveform diagram of the modes in the discontinuous current mode according to the present disclosure, and FIG. 11 is another waveform diagram of the modes in the discontinuous current mode according to the present disclosure. From top to bottom, the waveform diagrams include an output voltage of the full-bridge circuit, a voltage and a current of a primary-side magnetizing inductance Lm of the transformer, a voltage and a current of a primary-side leakage inductance the transformer, a voltage and a current of the resonant capacitor Cr1, a voltage and a current of the resonant capacitor Cr2, a voltage and a current of the resonant capacitor Cd1, a voltage and a current of the resonant capacitor Cd2, a voltage and a current of the rectifier diode D1, a voltage and a current of the rectifier diode D2, and an output current of the full-bridge circuit.

The topology control in the present disclosure is as follows. A single-phase full-bridge circuit on the primary side of the topology transformer is composed of four MOSFETs: a first switching transistor Q1, a second switching transistor Q2, a third switching transistor Q3, and a fourth switching transistor Q4, where the first switching transistor Q1 and the second switching transistor Q2 form a leading bridge arm, and the third switching transistor Q3 and the fourth switching transistor Q4 form a lagging bridge arm. The output of the single-phase full-bridge circuit is connected to the primary side of the transformer, where Lr is the primary-side leakage inductance of the transformer, and Lm is the primary-side magnetizing inductance of the transformer. The secondary side of the transformer is connected to the rectifier diodes D1 and D2, and the resonant capacitors Cr1 and Cr2, where both Cr1 and Cr2 have a capacitance of Cr. The first diode D1 and the second diode D2 are respectively connected in parallel with the first capacitor Cd1 and the second capacitor Cd2, where both Cd1 and Cd2 have a capacitance of Cd.

On the primary side, through phase-shifted full-bridge technology, soft switching (zero-voltage switching, ZVS) control of the leading bridge arm is achieved by using freewheeling current of the leakage inductance Lr of the transformer as well as the body diodes and parasitic capacitances of the MOSFETs, while soft switching (zero-current switching, ZCS) control of the lagging bridge arm is achieved by using the freewheeling current of the leakage inductance Lr of the transformer, and soft switching (zero-current switching, ZCS) of the rectifier diodes on the secondary side of the transformer is achieved by natural commutation. During the time period when the rectifier diodes on the secondary side are turned off and their parallel capacitors Cd1/Cd2 are charged and discharged, the topology does not charge the secondary side Vm. In this time period, the input direct-current source on the primary side of the transformer charges the leakage inductance Lr of the transformer to store power, until the charging and discharging of the capacitors Cd1/Cd2 on the secondary side of the transformer are completed, and then the rectifier diodes complete commutation and start to supply power to Vm. At this time, since the current of the leakage inductance Lr on the primary side cannot change abruptly, an induced electromotive force is generated to maintain the original current, and the induced electromotive force is superimposed with the input voltage Vg to simultaneously supply power to the transformer, thereby increasing the input voltage range and improving the boost ratio of the topology.

In the continuous current mode, during the transition from mode 2 to mode 3, after the first switching transistor Q1 of the leading bridge arm is turned off, since the current of the transformer cannot change abruptly, the current in the bridge arm is commutated from the first switching transistor Q1 to the body diode of the second switching transistor Q2, thereby providing a condition for zero-voltage switching (ZVS) turn-on of the second switching transistor Q2. During the transition from mode 5 to mode 6, the second switching transistor Q2 is turned off and the first switching transistor Q1 is turned on, with the same soft-switching principle. In mode 3, the current of the transformer freewheels to near zero. At this time, the fourth switching transistor Q4 may achieve near-zero-current switching (ZCS) turn-off, and since the current of the transformer cannot change abruptly, the current in the bridge arm is commutated from the fourth switching transistor Q4 to the body diode of the third switching transistor Q3, thereby providing a condition for zero-voltage switching (ZVS) turn-on of the third switching transistor Q3. At the end of mode 6, the third switching transistor Q3 is turned off and the fourth switching transistor Q4 is turned on, with the same soft-switching principle.

In the discontinuous current mode, the implementation of soft switching of the leading bridge arm is the same as that in the continuous current mode.

Mode 4 in the discontinuous current mode is divided into two stages. In mode 4-2, the primary-side current of the transformer forms a loop through the body diodes of the second switching transistor Q2 and the fourth switching transistor Q4, and when the current of the transformer freewheels to near zero, the fourth switching transistor Q4 may achieve near-zero-current switching (ZCS) turn-off. Moreover, since the current direction of the transformer cannot change abruptly, the current in the bridge arm is commutated from the fourth switching transistor Q4 to the body diode of the third switching transistor Q3, thereby providing a condition for zero-voltage switching (ZVS) turn-on of the third switching transistor Q3. At the end of mode 8, the third switching transistor Q3 is turned off and the fourth switching transistor Q4 is turned on, with the same soft-switching principle. By adding the free resonance process of mode 4 and mode 8 in the discontinuous current mode, the switching frequencies during low-power transmission is reduced, while the soft switching control of the full-bridge circuit is still maintained. After reducing the switching frequencies, a larger effective turn-on duration ton of the switching transistors is required under the same transmission power, which contributes to the stability of control during low-power transmission and reduces the switching losses.

Based on the above control, through the resonant elements of this topology, including the primary-side leakage inductance Lr, the magnetizing inductance Lm, the third capacitor Cr1, the fourth capacitor Cr2, the first capacitor Cd1, and the second capacitor Cd2, a turns ratio n of the transformer, the input and output voltages Vg and Vm, a switching cycle T, and an effective turn-on duration ton, an input current Iin may be obtained. Since Lr, Lm, Cd1, Cd2, Cr1, Cr2, and the turns ratio n of the transformer are constants, the following is obtained: $Iin = I 1 \left(Vg, Vm, Lr, Lm, Cd, Cr, T, ton\right) = I 2 \left(Vg, Vm, T, ton\right) .$

Furthermore, an input power Pin may be obtained by Pin = Iin * Vg.

Based on the above soft switching (ZCS) control operating mode of the lagging bridge arm on the primary side of the transformer, the effective turn-on duration (mode 1 and mode 2) may be derived by: $ton = ton 1 \left(Vm/Vg, Lr, Lm, Cd, Cr, T\right) = ton 2 \left(Vm/Vg, T\right) .$

A phase-shift duration (mode 3) may be obtained by: $tps = T / 2 - ton = tps \left(Vm/Vg,T\right) .$

A control method for a phase-shifted full-bridge converter is provided according to the present disclosure, comprising: determining, in response to detecting that an operating state of the phase-shifted full-bridge circuit satisfies a preset condition, target turn-on durations of the respective switching transistors of the phase-shifted full-bridge circuit based on a power demand value and circuit element information, so as to increase turn-on durations of the switching transistors while keeping the output power of the phase-shifted full-bridge circuit unchanged, thereby reducing the switching frequencies of the switching transistors; determining a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit. It can be seen that in the technical solution provided by the present disclosure, when the operating state of the phase-shifted full-bridge circuit satisfies the preset condition, the target turn-on durations of the switching transistors are determined based on a correspondence of the turn-on durations of the switching transistors between the continuous current mode and the discontinuous current mode, and the target duty cycle is determined based on the correspondence among the duty cycle, the turn-on durations, and the circuit output power in the discontinuous current mode, so that the phase-shifted full-bridge circuit enters the discontinuous current mode, thereby reducing the switching losses of the switching transistors. Further, by controlling the first capacitor, the second capacitor, the third capacitor, the fourth capacitor, and the transformer of the phase-shifted full-bridge circuit to be in the resonant state during the turn-off duration of the phase-shifted full-bridge circuit, soft switching of the circuit is achieved, thereby further reducing the switching losses.

On the basis of the above embodiments, determining the turn-off duration of the phase-shifted full-bridge circuit 2 based on the circuit element information includes: determining performance information of the switching transistors based on the circuit element information; determining, based on the performance information, the power demand value, and a correspondence between the switching losses of the switching transistors and the circuit output power, a preset frequency that enables the circuit output power of the phase-shifted full-bridge circuit 2 to satisfy the power demand value and minimizes the switching losses of the switching transistors; and determining the turn-on durations of the switching transistors corresponding to the preset frequency, and determining the turn-off duration of the phase-shifted full-bridge circuit 2 based on the turn-on durations of the switching transistors.

Correspondingly, determining whether the power demand value satisfies the preset condition includes: acquiring the power demand value; determining whether the power demand value is greater than a power threshold, where the power threshold is determined by a limit switching frequency, and the limit switching frequency is determined based on the correspondence between the switching frequencies and the switching losses of the switching transistors in the phase-shifted full-bridge circuit 2; and if the power demand value is not greater than the power threshold, determining that the power demand value does not satisfy the preset condition.

In the above embodiments, the control method for the phase-shifted full-bridge converter is described in detail. Embodiments corresponding to a control apparatus for a phase-shifted full-bridge converter are further provided in the present disclosure. It should be noted that the present disclosure describes the embodiments of the control apparatus from two perspectives, one based on functional modules and the other based on hardware.

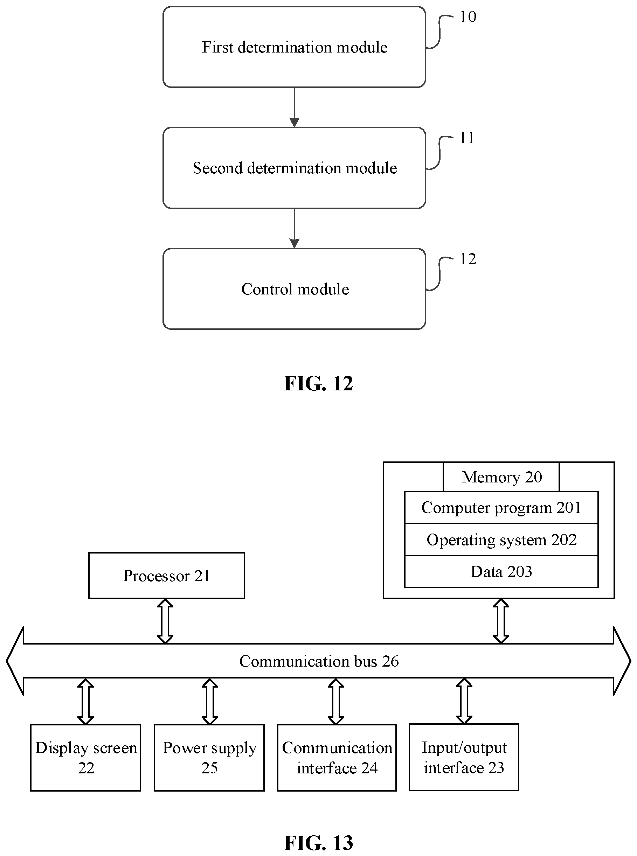

FIG. 12 is a structural diagram of a control apparatus for a phase-shifted full-bridge converter provided by an embodiment of the present disclosure. As shown in FIG. 12, the control apparatus comprises:
a first determination module 10, configured to determine, in response to detecting that an operating state of the phase-shifted full-bridge circuit satisfies a preset condition, target turn-on durations of the respective switching transistors of the phase-shifted full-bridge circuit based on a power demand value and circuit element information;
a second determination module 11, configured to determine a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and
a control module 12, configured to control a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

Since the embodiments of the apparatus correspond to the embodiments of the method, reference may be made to the description of the method for the embodiments of the apparatus, which will not be repeated here.

A control apparatus for a phase-shifted full-bridge converter is provided according to the present disclosure, comprising: determining, in response to detecting that an operating state of the phase-shifted full-bridge circuit satisfies a preset condition, target turn-on durations of the respective switching transistors of the phase-shifted full-bridge circuit based on a power demand value and circuit element information, so as to increase turn-on durations of the switching transistors while keeping the output power of the phase-shifted full-bridge circuit unchanged, thereby reducing the switching frequencies of the switching transistors; determining a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit. It can be seen that in the technical solution provided by the present disclosure, when the operating state of the phase-shifted full-bridge circuit satisfies the preset condition, the target turn-on durations of the switching transistors are determined based on a correspondence of the turn-on durations of the switching transistors between the continuous current mode and the discontinuous current mode, and the target duty cycle is determined based on the correspondence among the duty cycle, the turn-on durations, and the circuit output power in the discontinuous current mode, so that the phase-shifted full-bridge circuit enters the discontinuous current mode, thereby reducing the switching losses of the switching transistors. Further, by controlling the first capacitor, the second capacitor, the third capacitor, the fourth capacitor, and the transformer of the phase-shifted full-bridge circuit to be in the resonant state during the turn-off duration of the phase-shifted full-bridge circuit, soft switching of the circuit is achieved, thereby further reducing the switching losses.

FIG. 13 is a structural diagram of another control apparatus for a phase-shifted full-bridge converter provided by an embodiment of the present disclosure. As shown in FIG. 13, the control apparatus for the phase-shifted full-bridge converter comprises: a memory 20 for storing a computer program; and a processor 21 for implementing the steps of the control method for the phase-shifted full-bridge converter as described in the above embodiments when executing the computer program.

The control apparatus for the phase-shifted full-bridge converter in this embodiment may include but is not limited to a smartphone, a tablet computer, a laptop computer, or a desktop computer, etc.

The processor 21 may include one or more processing cores, such as a 4-core processor, an 8-core processor, etc. The processor 21 may be implemented in at least one hardware form selected from a digital signal processor (DSP), a field-programmable gate array (FPGA), and a programmable logic array (PLA). The processor 21 may also include a main processor and a coprocessor. The main processor is a processor for processing data in an awake state, also referred to as a central processing unit (CPU); and the coprocessor is a low-power processor for processing data in a standby state. In some embodiments, the processor 21 may be integrated with a graphics processing unit (GPU), which is responsible for rendering and drawing the content to be displayed on the display screen. In some embodiments, the processor 21 may further include an artificial intelligence (AI) processor, which is used for processing computing operations related to machine learning.

The memory 20 may include one or more computer-readable storage media, which may be non-transitory. The memory 20 may further include a high-speed random access memory and a non-volatile memory, such as one or more magnetic disk storage devices and flash memory storage devices. In the embodiments, the memory 20 is at least configured to store the computer program 201, where after the computer program is loaded and executed by the processor 21, the relevant steps of the control method for the phase-shifted full-bridge converter disclosed in any of the foregoing embodiments may be implemented. In addition, the resources stored in the memory 20 may further include an operating system 202 and data 203, etc., and the storage mode may be temporary storage or permanent storage. The operating system 202 may include Windows, Unix, Linux, etc.

In some embodiments, the control apparatus for the phase-shifted full-bridge converter may further include a display screen 22, an input/output interface 23, a communication interface 24, a power supply 25, and a communication bus 26.

Those skilled in the art can understand that the structure shown in FIG. 13 does not constitute a limitation on the control apparatus for the phase-shifted full-bridge converter, and may include more or fewer components than those shown in the figure.

The control apparatus for the phase-shifted full-bridge converter provided in the embodiments of the present disclosure includes a memory and a processor. When executing the program stored in the memory, the processor may implement the following method: determining, in response to detecting that an operating state of the phase-shifted full-bridge circuit satisfies a preset condition, target turn-on durations of the respective switching transistors of the phase-shifted full-bridge circuit based on a power demand value and circuit element information; determining a target duty cycle and an output cycle of the phase-shifted full-bridge circuit based on the target turn-on durations and a preset correspondence, where the preset correspondence is a correspondence among a duty cycle, turn-on durations, and a circuit output power in a discontinuous current mode; and controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

Finally, in an embodiment of the present disclosure, a computer-readable storage medium is further provided. A computer program is stored on the computer-readable storage medium, and when the computer program is executed by a processor, the steps described in the above method embodiments are implemented.

It can be understood that if the method in the above embodiments is implemented in the form of a software functional unit and sold or used as an independent product, it can be stored in a computer-readable storage medium. Based on such understanding, the technical solution of the present disclosure, or the part contributing to the prior art, or all or part of the technical solution, may be embodied in the form of a software product. The computer software product is stored in a storage medium and executes all or part of the steps of the method in various embodiments of the present disclosure. The aforementioned storage medium includes: a USB flash drive, a removable hard disk, a read-only memory (ROM), a random access memory (RAM), a magnetic disk, or an optical disk, and other media that can store program codes.

The phase-shifted full-bridge converter and the control method, apparatus, and medium thereof according to the present disclosure have been described in detail above. In the specification, the various embodiments are described in a progressive manner. Each embodiment focuses on the differences from other embodiments, and the same or similar parts between the various embodiments may be referred to each other. For the apparatus disclosed in the embodiments, since it corresponds to the method disclosed in the embodiments, the description is relatively simple, and the relevant parts may be referred to the description of the method part. It should be pointed out that for those ordinarily skilled in the art, without departing from the principle of the present disclosure, several improvements and modifications may be made to the present disclosure, and these improvements and modifications also fall within the protection scope of the claims of the present disclosure.

It should also be noted that in this specification, relational terms such as first and second are merely used to distinguish one entity or operation from another entity or operation, and do not necessarily require or imply any such actual relationship or order between these entities or operations. Moreover, the terms "include", "comprise", or any other variants thereof are intended to cover a non-exclusive inclusion, so that a process, method, article, or device including a series of elements not only includes those elements but also includes other elements not explicitly listed, or elements inherent to such a process, method, article, or device. Without further limitations, an element defined by the phrase "including a ..." does not exclude the presence of additional identical elements in the process, method, article, or device that includes the element.

## Claims

1. A phase-shifted full-bridge converter, comprising a controller, a phase-shifted full-bridge circuit, a first capacitor, and a second capacitor, wherein
the phase-shifted full-bridge circuit comprises a first bridge arm circuit, a second bridge arm circuit, a magnetizing inductance, a transformer, a first diode, a second diode, a third capacitor, and a fourth capacitor, wherein
a first terminal of the magnetizing inductance is connected to a midpoint of the first bridge arm circuit, a second terminal of the magnetizing inductance is connected to a first terminal of a primary side of the transformer, a second terminal of the primary side of the transformer is connected to a midpoint of the second bridge arm circuit, a first terminal of a secondary side of the transformer is connected to a second terminal of the third capacitor and a first terminal of the fourth capacitor, a second terminal of the secondary side of the transformer is connected to an anode of the first diode and a cathode of the second diode, a cathode of the first diode is connected to a first terminal of the third capacitor, a node connecting the cathode of the first diode and the first terminal of the third capacitor serves as a first output terminal, an anode of the second diode is connected to a second terminal of the fourth capacitor, and a node connecting the anode of the second diode and the second terminal of the fourth capacitor serves as a second output terminal;
the first capacitor is connected in parallel with the first diode on a secondary side of the phase-shifted full-bridge circuit, and the second capacitor is connected in parallel with the second diode on the secondary side of the phase-shifted full-bridge circuit; and
the controller is connected to control terminals of respective switching transistors of the phase-shifted full-bridge circuit.

2. A control method for the phase-shifted full-bridge converter, applied to the phase-shifted full-bridge converter according to claim 1, wherein the control method comprises:
determining, in response to detecting that an operating state of the phase-shifted full-bridge circuit satisfies a preset condition, target turn-on durations of the respective switching transistors of the phase-shifted full-bridge circuit based on a power demand value and circuit element information;
determining a target duty cycle and an output cycle of the phase-shifted full-bridge circuit based on the target turn-on durations and a preset correspondence, wherein the preset correspondence is a correspondence among a duty cycle, turn-on durations, and a circuit output power in a discontinuous current mode; and
controlling a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

3. The control method for the phase-shifted full-bridge converter according to claim 2, wherein determining whether the operating state of the phase-shifted full-bridge circuit satisfies the preset condition comprises:
acquiring real-time switching frequencies of the switching transistors of the phase-shifted full-bridge circuit and the power demand value of the phase-shifted full-bridge circuit; and
determining, in response to the real-time switching frequencies being greater than a limit switching frequency and/or the power demand value being lower than a preset power, that the operating state of the phase-shifted full-bridge circuit does not satisfy the preset condition, wherein the limit switching frequency is determined based on a correspondence between switching frequencies and switching losses of the switching transistors of the phase-shifted full-bridge circuit.

4. The control method for the phase-shifted full-bridge converter according to claim 3, wherein determining the target turn-on durations of the respective switching transistors of the phase-shifted full-bridge circuit based on the power demand value and the circuit element information comprises:
determining performance information of the switching transistors based on the circuit element information; and
determining, based on the performance information, the power demand value, and a correspondence between the switching losses of the switching transistors and the circuit output power, a preset frequency that enables the circuit output power of the phase-shifted full-bridge circuit to satisfy the power demand value and minimizes the switching losses of the switching transistors, and determining the target turn-on durations.

5. The control method for the phase-shifted full-bridge converter according to claim 3, wherein determining the target duty cycle and the output cycle of the phase-shifted full-bridge circuit based on the target turn-on durations and the preset correspondence comprises:
acquiring the correspondence among the turn-on durations of the switching transistors, the duty cycle, and the circuit output power in the discontinuous current mode; and
determining the target duty cycle and the output cycle of the phase-shifted full-bridge circuit based on the target turn-on durations and the correspondence.

6. The control method for the phase-shifted full-bridge converter according to claim 2,
wherein during the turn-off duration, controlling the first capacitor, the second capacitor, the third capacitor, the fourth capacitor, and the transformer to be in the resonant state comprises:
in a first resonant cycle, turning on a second switching transistor and a fourth switching transistor of the phase-shifted full-bridge circuit, and turning off a first switching transistor and a third switching transistor, to control the first capacitor, the second capacitor, the transformer, the third capacitor, and the fourth capacitor to enter the resonant state; and
in a second resonant cycle, turning off the second switching transistor and the fourth switching transistor of the phase-shifted full-bridge circuit, and turning on the first switching transistor and the third switching transistor, to control the first capacitor, the second capacitor, the transformer, the third capacitor, and the fourth capacitor to enter the resonant state, and
wherein after controlling the first capacitor, the second capacitor, the third capacitor, the fourth capacitor, and the transformer to enter the resonant state, the control method further comprises:
determining a number of cycles of the resonant state based on the turn-off duration to determine a duration of the resonant state.

7. The control method for the phase-shifted full-bridge converter according to claim 6, further comprising:
controlling, in response to the power demand value satisfying the preset condition, the phase-shifted full-bridge circuit to be in a continuous current mode.

8. A control apparatus for the phase-shifted full-bridge converter, applied to the phase-shifted full-bridge converter according to claim 1, wherein the control apparatus comprises:
a first determination module, configured to determine, in response to detecting that an operating state of the phase-shifted full-bridge circuit satisfies a preset condition, target turn-on durations of the respective switching transistors of the phase-shifted full-bridge circuit based on a power demand value and circuit element information;
a second determination module, configured to determine a target duty cycle and an output cycle of the phase-shifted full-bridge circuit based on the target turn-on durations and a preset correspondence, wherein the preset correspondence is a correspondence among a duty cycle, turn-on durations, and a circuit output power in a discontinuous current mode; and
a control module, configured to control a conduction timing of the switching transistors of the phase-shifted full-bridge circuit based on the output cycle and the target duty cycle, to cause the first capacitor, the second capacitor, the third capacitor, the fourth capacitor, and the transformer of the phase-shifted full-bridge circuit to be in a resonant state during a turn-off duration of the phase-shifted full-bridge circuit.

9. A control apparatus for a phase-shifted full-bridge converter, comprising:
a memory, configured to store a computer program; and
a processor, configured to execute the computer program to implement the control method for the phase-shifted full-bridge converter according to any one of claims 2 to 7.

10. A computer-readable storage medium, wherein a computer program is stored on the computer-readable storage medium, and the computer program is executed by a processor to implement the control method for the phase-shifted full-bridge converter according to any one of claims 2 to 7.
